# EUROPEAN PATENT SPECIFICATION

(11) **EP 1 988 184 B1**
(45) Date of publication and mention of the grant of the patent: **22.06.2011**
(21) Application number: 06714307.3
(22) Date of filing: 22.02.2006
(51) Int. Cl.: C23C 4/12

(54) **METHOD OF CONTROLLING PORE CONFIGURATION OF POROUS METAL**
VERFAHREN ZUR STEUERUNG DER PORENKONFIGURATION VON PORÖSEM METALL
PROCEDE PERMETTANT DE MAITRISER LA CONFIGURATION DES PORES D'UN METAL POREUX

(43) Date of publication of application: 05.11.2008
(73) Proprietor: KAWASAKI JUKOGYO KABUSHIKI KAISHA, Kobe shi, Hyogo 650-8670 (JP); Osaka University, Suita-shi Osaka 565-0871 (JP)
(72) Inventor: TAGUCHI, Koki c/o Kawasaki Jukogyo Kabushiki Kaisha, Hyogo 673-8666 (JP); MIZUTA, Akiyoshi c/o Kawasaki Jukogyo Kabushiki Kaisha, Hyogo 673-8666 (JP); ISHIDA, Katsuhiko c/o Kawasaki Jukogyo Kabushiki Kaisha, Hyogo 673-8666 (JP); MATSUZAKI, Yuji c/o Kawasaki Jukogyo Kabushiki Kaisha, Hyogo 673-8666 (JP); NAGATOME, Seiichi c/o Kawasaki Jukogyo Kabushiki Kaisha, Hyogo 673-8666 (JP); NAKAJIMA, Hideo c/o Osaka University, Osaka 565-0871, (JP); HYUN, Soong-Keun c/o Osaka University, Osaka 565-0871, (JP)
(74) Representative: Piésold, Alexander James
(86) International application number: PCT/JP2006/303167
(87) International publication number: WO 2007/096957

(56) References cited:
- EP-A- 1 452 264
- JP-A- 05 230 616
- JP-A- 63 000 450
- JP-A- 2000 239 760
- JP-A- 2004 257 335
- US-A1- 2003 127 775
- US-B1- 6 606 851

## Description

### Technical Field

The present invention relates to a method of controlling pore conditions of a porous metal having pores generated by dissolving gas in a molten metal during the solidification of the molten metal from its molten state. The invention is applicable, for instance, to a method of controlling the pore conditions (e.g., pore size, porosity and pore distribution) of a lotus type porous metal having applications in the combustor liner and turbine shroud of aircraft gas turbines and industrial gas turbines.

### Background Art

Gas turbines for use in aircraft, vessels, and generators etc. are required to exhibit a high efficiency and a high output. As a means to meet the request, gas turbines are designed to fulfill a rise in work temperature (i.e., gas turbine inlet temperature). To protect the material exposed to a high temperature atmosphere, various techniques have been heretofore developed. For instance, the parts exposed to combustion gas having extremely high temperature are made of heat-resistant alloys or provided with heat shield coating. Also, cooling techniques are skillfully utilized.

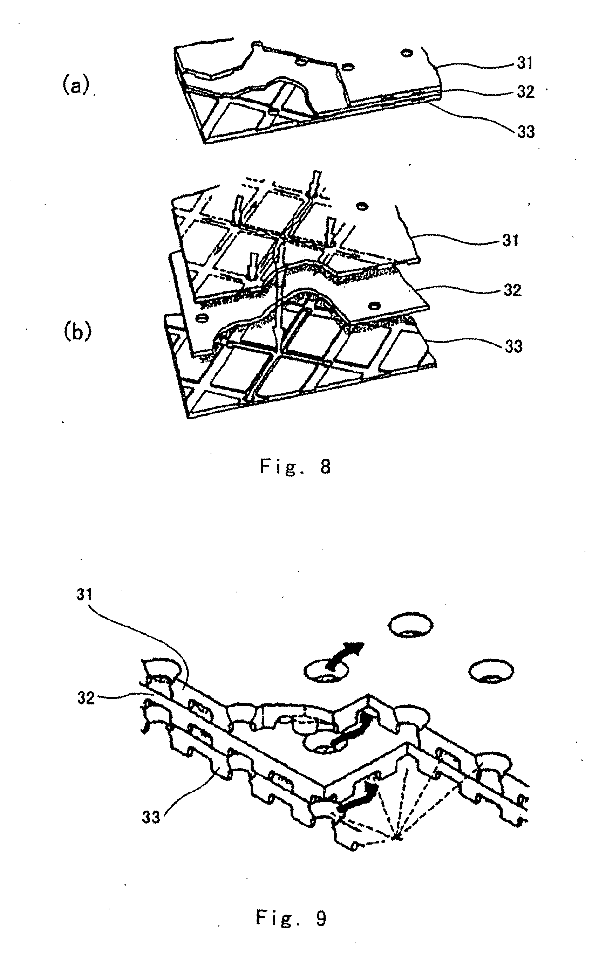

In cases where parts having intricate structures such as cooling devices for gas turbines are produced by machining, high-level processing skills are necessary. For example, the transpiration cooling structure, which requires machining of intricate cooling holes and bonding of parts, is currently adopted for use in the heat shield panels of the combustor liners of gas turbines. One example of conventional heat shield panels having the transpiration cooling structure is shown in Figs. 8(a), 8(b) and Fig. 9. This heat shield panel is configured to have a lower temperature layer 31, an intermediate layer 32 and a high temperature layer 33. As shown in these figures, the manufacturing process of the panel having such a structure is complicated and therefore costly because it involves an intricate machining operation, a separation of parts and the like.

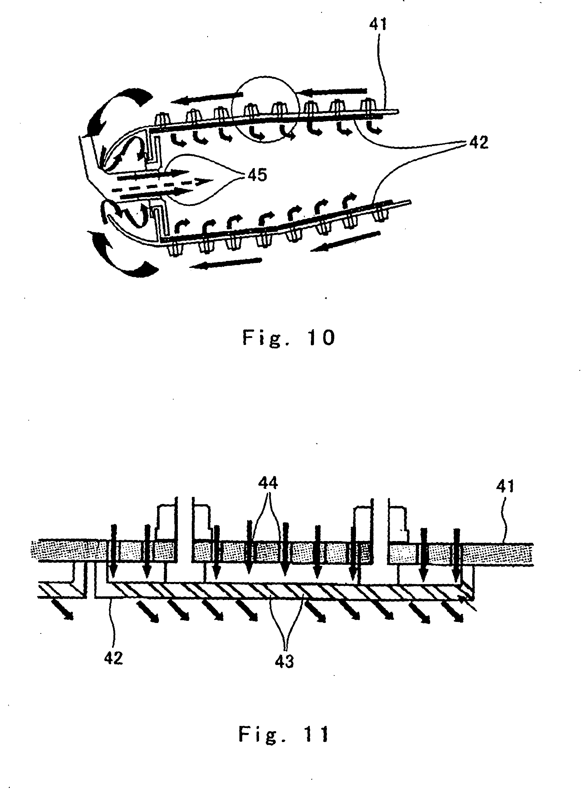

As to the combustor liner applied to a gas turbine, which is one of members exposed to a high temperature atmosphere, the tile type laminate cooling structure comes into use in addition to the conventional integrated type laminate structure. More specifically, an attempt such as shown in Figs. 10, 11 has been made. In this attempt, the inner side of a combustor liner 41 is provided with heat shield panels 42 that have minute pores 43 (diameter of approx. 0.7 mm, -10⁵ pores/m²) and are made from nickel-base superalloy. Pores 44 formed at the combustor liner 41 and the pores 43 formed at the heat shield panel 42 serve as paths for cooling air to thereby protect the structural member from heat. Fig. 11 is an enlarged view of the circled part of Fig. 10 that shows a sectional view of a combustor for use in a gas turbine. In Fig. 10, solid arrow indicates a stream of air whereas dotted arrow indicates a stream of fuel. Nickel-base superalloy used as the material of the heat shield panels, however, is extremely hard to grind and therefore difficult to machine a through hole with a mechanical means such as a drill. For this reason, through holes are formed at the conventional heat shield panels by laser machining or electro discharge machining. For instance, Patent Document 1 discloses a porosity distribution controlling method for porous metal material, which utilizes a combination of electro discharge machining and plastic working. The technique of Patent Document 1 has, however, revealed such a shortcoming that it is nearly impossible for the plastic working disclosed therein to form minute through holes and the electro discharge machining increases the cost of production very much when the manufacturing cost of one hole and the vast number of pores (10⁵ pores/m²) are taken into consideration.

For manufacture of a heat shield panel, there has been proposed a heat shield panel manufacturing method which incorporates a process of producing a lotus type porous metal by imparting a lotuslike structure to a metallic material (e.g., Patent Document 2). The lotus type porous metal is produced in such a way that gas is thoroughly dissolved in a molten metal under various high pressure gas atmospheres and the gas is extricated into a solid phase when the molten metal is cast. The lotus type porous metal is a porous metal including many pores comprised of a plurality of substantially linear through holes and/or closed holes, i.e., the pores act as voids that serve as paths for a cooling fluid and exhibit a heat insulating effect. The structure of the lotus type porous metal resembles a lotus root and therefore it is called "lotus metal". Hereinafter, the formation of a lotuslike structure is referred to as "lotus pore formation" and such voids are referred to as "lotus pores".

In recent years, there has been proposed a technique for forming a lotus type porous metal having a specified sheetlike shape or long bar shape by the continuous strip melting process. According to this method, the growing directions of the solidification interface and the liquid interface are controlled to thereby control the growing direction of the pores, so that a panel having minute pores dispersed therein can be produced by the lotus pore formation. Besides, large-sized lotus type porous metals can be produced by the continuous casting process. When the lotus pore formation is carried out, a panel having porosity as high as 50% or more can be produced by controlling the casting atmosphere.

However, since the lotus pore formation is a process to which the casting method of metals is applied, the producing conditions are difficult to control and the pore conditions (e.g., pore size, porosity and pore distribution) of the lotus type porous metals to be produced vary depending on the casting operations. Therefore, it is difficult to manufacture the products having stable quality, and further there are the following shortcomings.

Since a heat shield panel is a means to protect structural members from heat, it is advantageous that a large amount of air passes through the pores of the heat shield panel produced by the lotus pore formation process. However, as shown in Fig. 10, an increased amount of air passing through the pores of the heat shield panels 42 causes a decrease in the amount of air 45 used for combustion. This means that the air to fuel ratio at the combustion part decreases so that a sufficient amount of air for diluting flame cannot be obtained, resulting in a rise in the temperature at the combustion part. In this case, there is a likelihood of causing the problem that the amount of generation of nitrogen oxide increases or combustion losses occur in the parts of the combustor. In view of the foregoing, the heat shield panels desirably have a porosity (i.e., the ratio of the sectional area of the pores to the total sectional area of the pores and the base material in the area of the base material where the pores are formed) that is limited to a relatively small value to allow passage of a proper amount of air through the pores formed at the heat shield panels.

However, in cases where a heat shield panel having relatively low porosity (porosity of approx. 5 to 10%; diameter of pores of 0.2 to 0.5 mm) is manufactured by the lotus pore formation process, it is difficult to evenly distribute the pores without concentration, so that the effect of uniformly cooling the entire panel cannot be ensured.
Patent Document 1:Japanese Patent Provisional Publication-A-2002-254253
Patent Document 2:Japanese Patent Provisional Publication-A-2004-257335

It is known from US 2003/127775 to provide moulds, dies and forming tools comprising a body support member having a controlled porosity and formed by spraying particles on to a configured cavity of the support member.

### Disclosure of the Invention

### Problems to be solved by the Invention

The invention is directed to overcome the problems of the prior art as described above and a primary object of the invention is therefore to provide a method of controlling pore conditions of a porous metal by which the porous metal having various pore conditions (e.g., pore size, porosity and pore distribution) can be easily obtained.

### Means for Solving the Problems

The invention provides a method of controlling porosity of a heat shield panel comprising a porous metal, characterized in that the porosity of the porous metal of the heat shield panel is controlled by applying a plasma spraying to part of the surface of the porous metal.

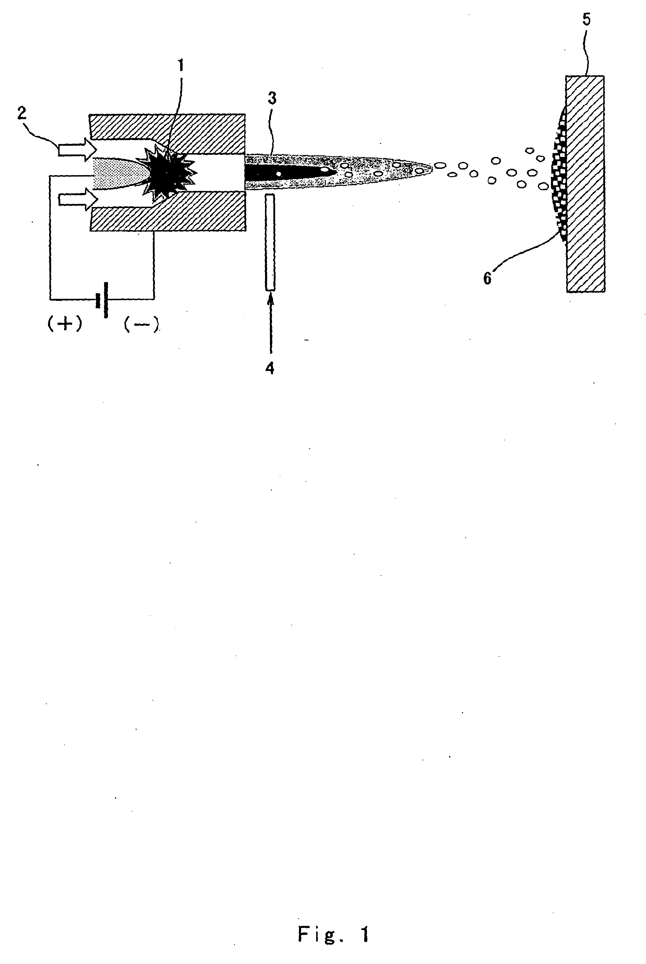

Plasma spraying is a technique in which, as shown in Fig. 1 that schematically illustrates the principle of the atmospheric plasma spraying, low voltage and high current is applied between the positive electrode and the negative electrode to generate an arc 1, which is then provided with gas 2 such as argon or hydrogen gas, so that a plasma jet 3 is generated. Then, a thermal spraying powder material 4 is added to the plasma jet 3 together with carrier gas so that the powder material 4 is brought into a molten state. In this way, the droplets of the molten material are sprayed onto a base plate 5 at high speed with the propellent force of the jet, thereby forming a coating 6.

The application of the atmospheric plasma spraying to the surface of the heat shield panel is thought to be technically equivalent to masking the surface of the panel. Therefore, as a masking means for exhibiting the same effect as the atmospheric plasma spraying, pore closing processes, which utilize various known bonding techniques such as TIG welding, may be employed.

### Effects of the Invention

The invention has the constitution as described above and therefore exhibits the following effects.
(1) The pore conditions of a heat shielded panel comprising a porous metal can be skillfully controlled by the known technique, i.e., plasma spraying to improve and stabilize the quality of the porous metal.
(2) As an example, if a lotus type porous metal is applied to the heat shield panel of a combustor liner, the pore size, porosity and pore distribution of the porous metal can be controlled without altering the manufacturing process by employing the atmospheric plasma spraying.
(3) As an example, if the pore conditions of a lotus-type porous metal having many minute pores applied to a heat shield panel are properly controlled by the method of the present invention, the cooling performance of the heat shield panel can be improved.

### Brief Description of Drawings

Fig. 1 is a schematic view showing the principle of an atmospheric plasma spraying process.
Figs. 2(a), 2(b) each show a schematic configuration of a lotus type porous metal manufacturing apparatus.
Fig. 3 is a photograph (magnification of one) showing the external appearance of a member made from a lotus type porous Ni-base superalloy having a porosity of 26%.
Fig. 4(a) is a photograph (magnification of one point four) showing the external appearance of a member made from the same lotus type porous Ni-base superalloy having a porosity of 26% like Fig. 3. Fig. 4(b) is a photograph (magnification of one point four) showing the external appearance of the member shown in Fig. 4(a) to the surface of which a plasma spraying is applied.
Fig. 5(a) is a photograph (magnification of one) showing the external appearance of a member made from a lotus type porous Ni-base superalloy having a porosity of 5%. Fig. 5(b) is a photograph (magnification of one) showing the external appearance of a member made from a lotus type porous Ni-base superalloy having a porosity of 5%, this member being prepared by partially masking (covering with a thermoset resin) the surface of a member made from a lotus-type porous Ni-base superalloy having a porosity of 30%. Fig. 5(c) is an enlarged partial view of the member shown in Fig. 5(b).

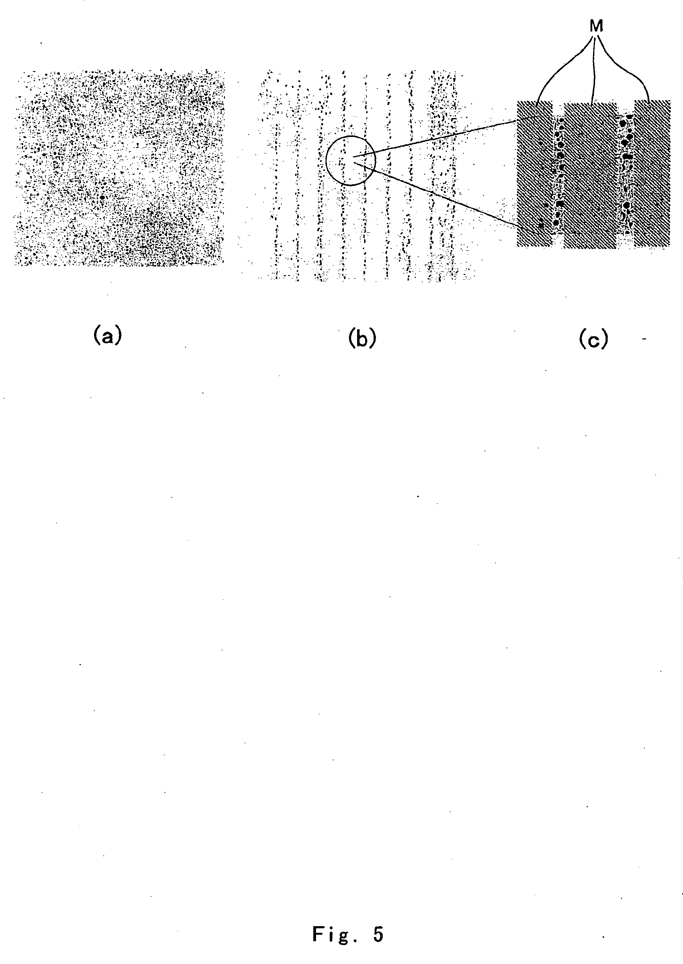

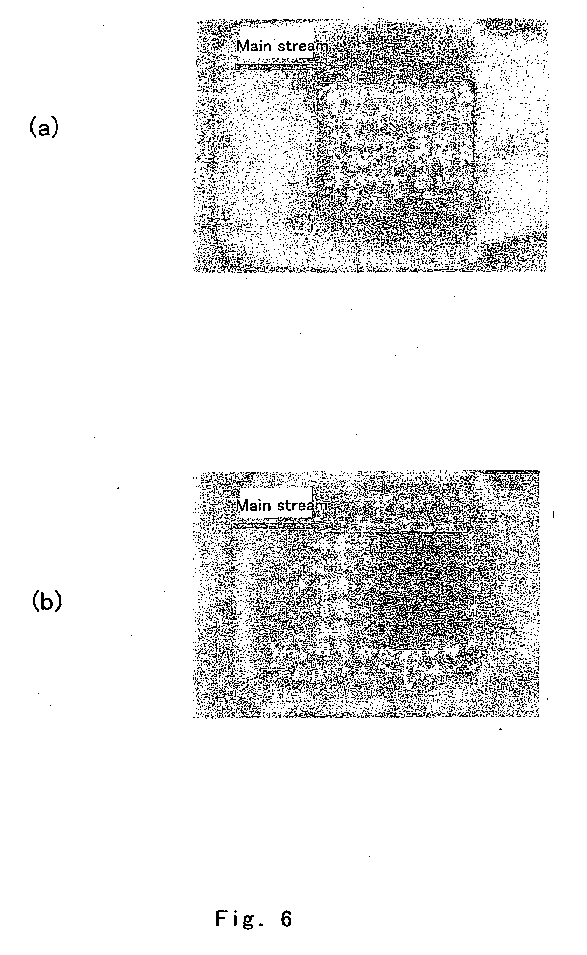

Fig. 6(a) shows a temperature distribution of the center part (excluding the outer periphery) of the surface of a test piece in a case that the member shown in Fig. 5(a) applied to a heat shield panel for the combustor liner of a gas turbine has been taken to a test for estimating a cooling performance thereof. Fig.6(b) shows a temperature distribution of the center part (excluding the outer part) of the surface of a test piece in a case that the member shown in Fig.5(b) applied to a heat shield panel for the combustor liner of a gas turbine has been taken to a test for estimating a cooling performance thereof.
Fig. 7(a) is an enlarged view in which the black/white image gradation of Fig. 6(a) is converted into index numbers. Fig. 7(b) is an enlarged view in which the black/white image gradation of Fig. 6(b) is converted into index numbers.
Fig. 8(a) is a perspective view showing one example of prior art heat shield panels. Fig. 8(b) is an exploded perspective view of the heat shield panel of Fig. 8(a).
Fig. 9 is a partly enlarged view of Fig. 8.
Fig. 10 is a sectional view showing one example of gas turbine combustors.
Fig. 11 is a partly enlarged view of Fig. 10.

### Explanation of Reference Numerals

- 1:: arc
- 2:: gas
- 3:: plasma jet
- 4:: thermal spraying powder material
- 5:: base plate
- 6:: coating
- 11:: stopper
- 12:: top chamber
- 13:: electromagnetic induction heating coil
- 14:: crucible
- 15:: duct connected to a vacuum source
- 16:: alumina tubular body
- 17:: heater
- 18:: copper mold
- 19:: cooling water inlet/outlet port
- 20:: stainless steel tubular body
- 21 a:: gas inlet port
- 21 b:: gas exhaust port
- 22:: pressure meter
- 23:: molten metal
- 24:: observation port
- 25:: porous metal
- 41:: combustor liner
- 42:: heat shield panel
- 43:: pore
- 44:: pore

### Best Mode for Carrying out the Invention

The porous metal material has a stereoscopic mesh structure. By controlling the size of the pores, porosity, pore distribution and the like, it can be used, for example, as a shock absorbing material for use in transport machinery (e.g., automobiles, railway vehicles and vessels, etc.) and in structural materials or as an acoustic absorbent, heat insulating material and lighter weight material. Known techniques for manufacturing such a porous metal material are as follows.

The first technique is called "casting process" according to which plaster or the like is first poured into the voids of a porous polymer material such as polyurethane foam to form a contour of mold and then the polymer material is burnt out by heating while the mold is made through a calcinations process. After a molten metal has been introduced into the cavities of the mold and solidified, the mold is broken and removed, thereby producing a porous metal.

The second technique is called "plating process". In this technique, a space in an aggregate of fine particles of resin or the like is filled with a metal, using the technique of electroless plating such as hot-dip nickel coating. Then, the fine particles are burnt out by heating to create voids. Accordingly, a porous metal is produced.

The third technique is called "molten metal foaming process". In this technique, a molten metal is mixed with a foaming agent and the mixture containing a large amount of gas generated by foam due to the foaming agent is solidified, thereby producing a porous material.

The fourth technique is called "space holder process" according to which a metal powder is mixed with a spacer powder material that can be burnt out by heating and the mixture is formed into a specified shape. Then, the spacer material is burnt out by heating to sinter the remaining metal powder at its sintering temperature. In this way, a porous metal is produced.

The first to fourth porous metal manufacturing techniques have advantages and disadvantages respectively and therefore they are applied to their respective suitable fields. The method of the present invention is applicable to the control of the pore conditions of porous metals manufactured by the first to fourth techniques.

Although there will be explained, as an example, the control of the pore conditions of a porous metal used as a heat shield panel with oblique holes for use in a gas turbine combustor, it is apparent that the present invention is not limited to the following embodiments but applicable to porous metals having a wide variety of applications such as heat insulating (heat shield) structural members and forced cooling structural members.

For instance, a combustor liner for use in the gas turbine of aircraft is sometimes exposed to combustion gas, the temperature of which locally exceeds 2000°C. In such an environment, a local heat gradient sometimes occurs in the combustor liner with a great heat stress working in a circumferential direction which results in breakage. To reduce the stress with cooling the liner by a minimum amount of cooling air in order to ensure a large amount of combustion air, consideration of effective cooling of the combustor liner or heat insulation thereof is important.

One conceivable means for reducing the heat stress is such that a plurality of heat-resistant panels each are adjacent one another in circumferential and axial directions at the inner side of the combustor liner, thereby protecting the combustor liner from the harsh thermal environment. If the combustor liner is consisted of an integrated type, when the combustor gets damaged in part, all of the combustor liner has to be replaced. In contrast with this, the above panel structure has such an advantage that only a damaged panel needs to be replaced. In view of the maintenance of the equipment, it is desirable to employ the structure in which a lotus type porous metal is applied in the form of panels to the inner side of the combustor liner as a cooling and heat insulating member for the combustor liner.

Although preferred embodiments of the present invention will be described below, the present invention is not necessarily limited to the following embodiments but various changes and modifications can be made to the disclosed embodiments without departing from the spirit and technical scope of the present invention.

A test was conducted using, as the lotus type porous metal material, hastelloy X (registered trade name: composition of Ni-9Mo-22Cr-18.5Fe-1.5Co) which is a Ni-base superalloy applicable as a heat shield panel for a combustor liner. An atmospheric plasma spraying was applied to the lotus type porous hastelloy X to control the pore conditions thereof. The atmospheric plasma spraying is a process for carrying out Thermal Barrier Coating (hereinafter referred to as "TBC") that is one of the steps of producing a heat shield panel. Therefore, the pore conditions of a target material can be controlled without increasing the manufacturing steps.

### (1) Porous Metal Manufacturing Apparatus

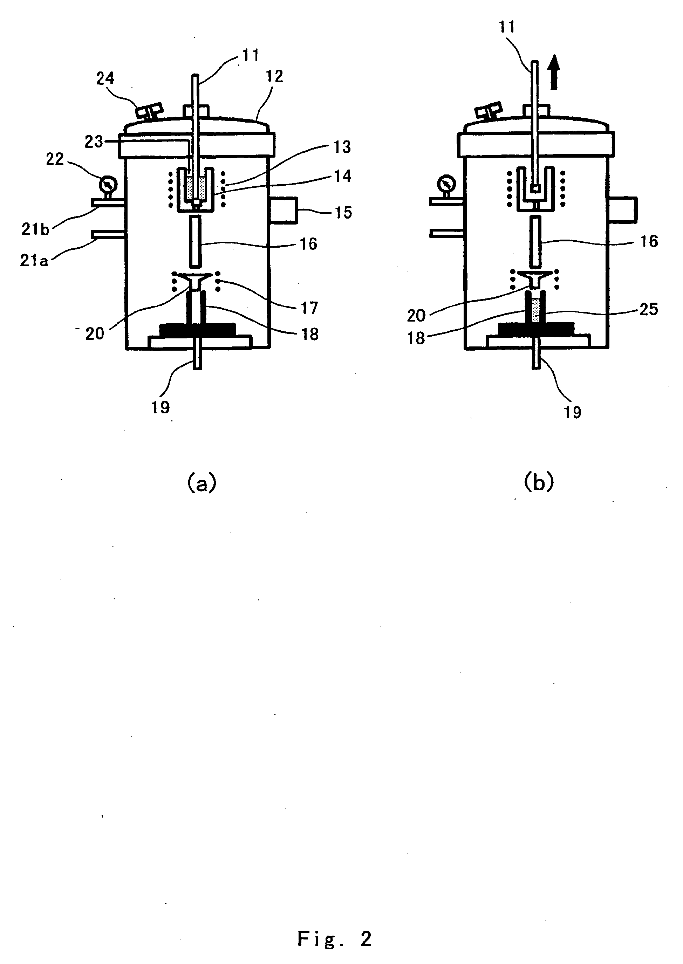

First, the manufacturing apparatus for the lotus type porous hastelloy X will be explained. Figs. 2(a), 2(b) each schematically show the configuration of the porous metal manufacturing apparatus. In Fig. 2(a), numeral 11 designates a stopper; numeral 12 designates a top chamber; numeral 13 designates an electromagnetic induction heating coil; numeral 14 designates a crucible; numeral 15 designates a duct connected to a vacuum source; numeral 16 designates an alumina tubular body; numeral 17 designates a heater; numeral 18 designates a copper mold; numeral 19 designates a cooling water inlet/outlet port for cooling the mold 18; numeral 20 designates a stainless steel tubular body; numeral 21 a designates a gas inlet port; numeral 21 b designates a gas exhaust port; numeral 22 designates a pressure meter; numeral 23 designates a molten metal; numeral 24 designates an observation port; and numeral 25 designates a porous metal.

### (2) Manufacture of Porous Metal

By use of the apparatus having the above constitution, an ingot of hastelloy X (weight of approx. 1000g) was put in the crucible 14 made from alumina and a high-frequency induction heating was performed at an atmosphere of mixed gas under a hydrogen partial pressure of 0.5Mpa and an argon partial pressure of 2.0MPa within the apparatus, thereby melting the hastelloy X. The crucible 14 has a hole having a diameter of 20 mm at the bottom thereof and the hole is closed by a stopper 11 made from alumina so that the molten metal 23 does not leak therefrom.

After the hastelloy X has been molten, the molten metal 23 was retained within the crucible 14 for 1200 seconds, thereby thoroughly dissolving hydrogen into the molten metal 23.

As shown in Fig. 2(b), the stopper 11 made from alumina was lifted to allow the molten metal 23 to flow into the copper mold 18 through the tubular bodies 16, 20 and the molten metal 23 was solidified in one way direction. Cooling water was introduced from the inlet/outlet port 19 to cool the mold 18 that was made from copper. BN, which is an agent for inhibiting seizing, was sprayed onto the wall of the mold 18 in order that an ingot can be formed without being seized to the mold 18.

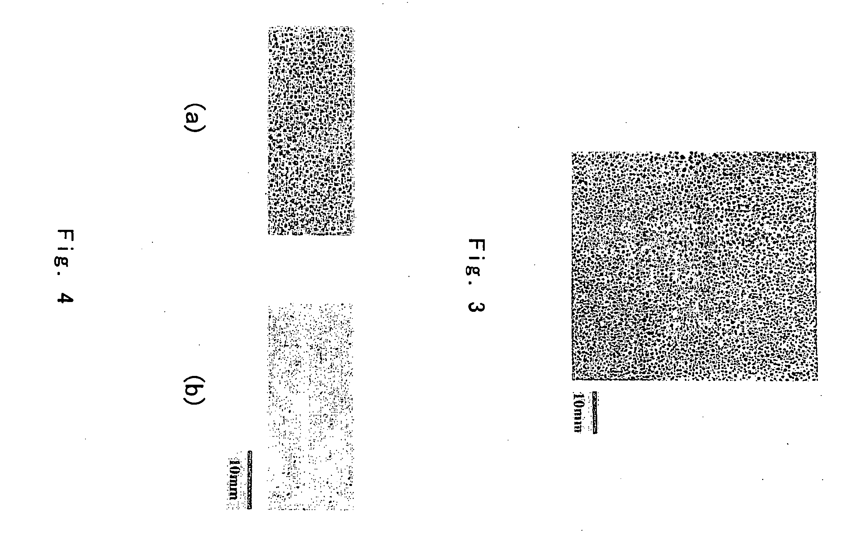

The ingot obtained by the above process was cut in a direction perpendicular or parallel to the solidifying direction by use of a wire electrical discharge machining device, whereby a base material of lotus-type porous hastelloy X was obtained. An image of the base material at section taken along a line-perpendicular to the extending direction of the pores of the base material was taken in a calculator and subjected to image analysis to obtain the porosity and the average pore diameter of the base material. Fig. 3 shows a photograph (magnification of one) of the external appearance of the base material. The black dots shown in Fig. 3 and Figs. 4, 5 (described below) represent the pores. The porosity and the average pore diameter of the base material of the lotus type porous hastelloy X shown in Fig. 3 were 26% and 0.4 mm respectively. Herein, the definition of "porosity" is the ratio of the sectional area of the pores to the total sectional area of the pores and the base material in the area of the base material where the pores are formed. As shown in Fig. 3, pores having diameters of around 0.4 mm are substantially evenly distributed.

### (3) Control of the Pore Condition

### (a) Shielding of Pores by Plasma Spraying

A metal bonding layer of thickness of 0.15 mm was formed on a surface of the base material of the lotus type porous hastelloy X (porosity of 26%) by the atmospheric plasma spraying as shown in Fig. 1 in which a mixed gas of argon and hydrogen was used as the gas for generating plasma and a powder of NiCoCrAIY (average particle size of 40 µ m) was added to a plasma jet generated by an output of about 40 kW. Further, a ceramic powder (yttria partially-stabilized zirconia) having an average particle size of 40 µm was added to the plasma jet to form a ceramic heat shield layer of thickness of 0.25 mm on the above metal spraying layer. Fig. 4(a) shows a photograph (magnification of one point four) of the external appearance of the base material before the application of TBC whereas Fig. 4(b) shows a photograph (magnification of one point four) of the external appearance of the base material after the application of TBC. As understood from the comparison between Figs. 4(a) and 4(b), the lotus pores can be substantially completely closed by applying TBC through the atmospheric plasma spraying process.

### (b) Control of Pore Conditions by Plasma Spraying

### [Test Pieces of the Present Invention and Test Pieces of Comparative Example]

Fig. 5(a) shows a photograph (magnification of one) of the external appearance of a base material of lotus type porous hastelloy X (porosity of 5%) prepared by the above process. Fig. 5(b) shows a photograph (magnification of one) of the external appearance of a base material having a porosity of 5% and prepared in the following way: a base material of lotus type porous hastelloy X (porosity of 30%) is first prepared by the same method as described above and then, the surface of this base material is partially covered with a mask M made from thermoset resin (see Fig. 5(c)) in order that the base material may be later subjected to TBC application by plasma spraying. Fig. 5(c) is an enlarged partial view of the base material shown in Fig. 5(b).

### [Cooling Performance Estimating Test and Display of Test Result]

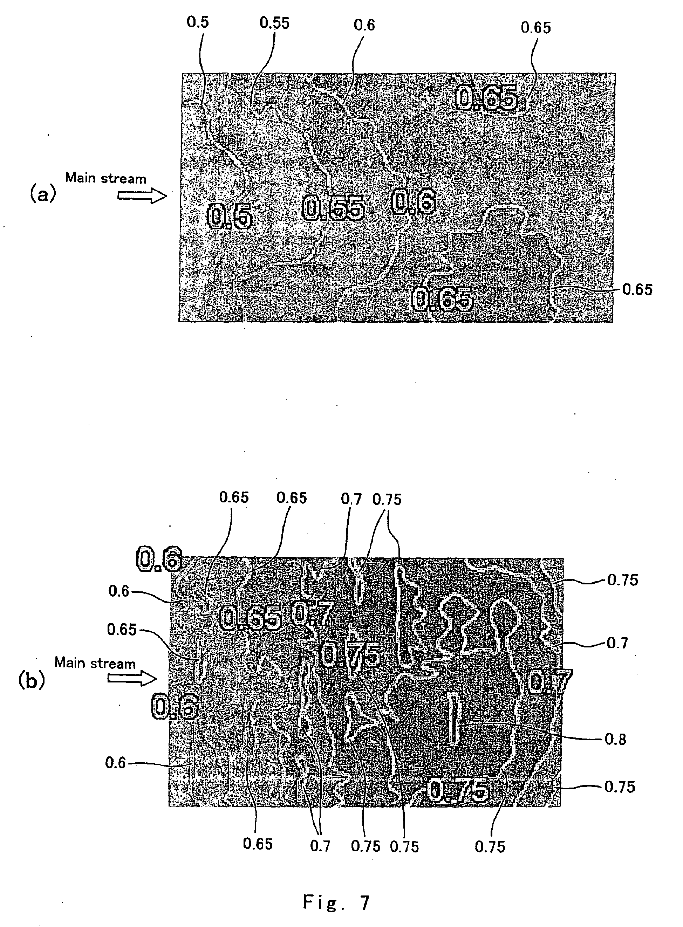

Figs. 6(a), 6(b) show the temperature distributions of the center part (excluding the outer periphery) of the surface of the test pieces for the base materials shown in Figs. 5(a), 5(b), respectively. This is a test based on the assumption that each test piece has been applied to a heat shield panel for the combustor liner of a gas turbine of the structure shown in Fig. 10, and each specimen was taken to a test for estimating a cooling performance thereof. More specifically, in the test, the temperature difference between the cooling air to be supplied to the heat shield panel and the main stream of air (that is assumed to be combustion gas) was set to 20°C (cooling air at 30°C, combustion gas at 50°C), and the surface temperature distribution of the rectangular test piece assumed to imitate a heat shield panel was measured with an infrared temperature meter. Figs. 6(a), 6(b) each show a black/white gradation to represent a temperature distribution. Portions darker than whitish portions indicate areas where cooling has advanced to a relatively high degree. Since the difference between the black portions and the white portions is somewhat indistinct, the result of the temperature measurement represented by the black/white gradation is converted into index numbers called "cooling efficiency" (minimum value of 0, maximum value of 1) and shown in enlarged form in Figs. 7(a), 7(b) for easy comprehension. The magnitude of cooling efficiency corresponds to the magnitude of cooling capacity. Cooling efficiency becomes 1 when the heat shield panel has been thoroughly cooled, that is, when the temperature of the heat shield panel becomes equal to the - temperature of the cooling air. Cooling efficiency becomes 0 when the heat shield panel has not been cooled at all, that is, when the temperature of the heat shield panel remains equal to the temperature of the combustion gas. In the cooling performance estimating test, the flow rate of the cooling air and the combustion gas was set at 20m/sec. Assuming that the temperature of the combustion gas in the actual combustor is about 1500°C and the temperature of the cooling air is about 500°CC, a difference of 0.1 at cooling efficiency is equivalent to a temperature difference of about 100°C at actual temperature.

### [Technical Background for Cooling Performance Estimating Test]

In Figs. 6(a), 6(b) and Figs. 7(a), 7(b), the main stream of air (e.g., combustion gas) flows from left to right, whereas the cooling air flows in a direction perpendicular to the flowing direction of the main stream of air, that is, the cooling air flows in a direction perpendicular to the plane of each drawing so as to cross the main stream of air at right angles. In both of Figs. 7(a), 7(b), the cooling efficiency shows a tendency to increase from the upstream side to the downstream side. This is due to the effect that the cooling air which blows up from the upstream side cools the panel surface at the downstream side. In an actual combustor, a plurality of heat shield panels of a certain size are continuously aligned in a direction from the upstream side to the downstream side and a plurality of such panel rows are circumferentially arranged in parallel. The heat shield panels are accordingly arranged in a checkerboard pattern and therefore the ends of each panel are indirectly cooled by the cooling air flowing in the pores of the adjacent panels. More concretely, the upstream side of a panel (first panel) is cooled by the cooling air which blows up from another panel (second panel) adjacently located in the upstream side of the first panel. The downstream side of the first panel is indirectly cooled by the cooling air for cooling another panel (third panel) adjacently located in the downstream side of the first panel. The upper and lower edges of the first panel, each of which connects the upstream side and the downstream side of the first panel, are indirectly cooled by the cooling air for cooling the adjacent panels (fourth and fifth panels) located in the sides of the upper and lower edges, respectively, of the first panel. In the cooling performance estimating test with such a test piece, the value of cooling efficiency drops in the right end, the left end, the upper edge and the lower edge of the test piece, but it is not really a problem. In Figs. 7(a) and (b), the important thing is variations in cooling efficiency along a vertical direction from the upper edge to the lower edge and the lowest value of cooling efficiency. For this reason, the temperature distribution of the center part of the surface of the test piece, which excludes the temperature distribution of the peripheral part thereof, is shown in Figs. 6(a), 6(b).

### [Review of Test Result]

Next, the test result shown in Figs. 6(a), 6(b) and Figs. 7(a), 7(b) will be reviewed based on the technical background as described above.

The life of a heat shield panel is dependent upon the durability of the portion of which the temperature is at the highest value. Specifically, since the required amount of cooling is determined such that the cooling performance in the portion having the lowest cooling efficiency satisfies the required level, it is desirable that the cooling efficiency of the surface of the heat shield panel would be as uniform as possible.

In Figs. 6(a), 6(b) and Figs. 7(a), 7(b), the cooling air which blows up from the upstream side cools the surface of the panel at the downstream side and it is therefore natural that the cooling efficiency increases from the upstream side to the downstream side. On the other hand, the value of cooling efficiency changes along the vertical direction of the drawing plane from the upper edge to the lower edge because of the pores unevenly distributed for the reason that it is technically impossible to perfectly evenly distribute the pores on the surface of a test piece.

### (a) Fig. 7(a)

In Fig. 7(a) that shows the result of the cooling Performance estimating test conducted on the base material having a porosity of 5%, the variation in the value of cooling efficiency along the vertical direction of the drawing plane from the upper edge to the lower edge is large. Specifically, the portions having cooling efficiencies of 0.55 and 0.65 bulge out significantly toward the downstream side. When the test piece is viewed along the vertical direction of the drawing plane from the upper edge to the lower edge, the variation in cooling efficiency is considered to be significant.

### (b) Fig. 7(b)

In Fig. 7(b) that shows the result of the cooling performance estimating test conducted on the base material whose porosity has been controlled so that it changed in porosity from 30% to 5%, unevenness is seen more or less, but the variation in the value of cooling efficiency along the vertical direction of the drawing plane from the upper edge to the lower edge is small. In view of this, the cooling of the surface of the test piece can be considered to be uniform.

In Fig. 7(b), three small regions enclosed by the line of 0.65 exist between the lines of 0.6 and 0.65 (on the left side of the drawing). Two small regions enclosed by the line of 0.70 exist between the lines of 0.65 and 0.7. Four small regions enclosed by the line of 0.75 exist between the line of 0.7 (at the center) and the line of 0.7 (on the right side). A small region enclosed by the line of 0.8 exists in the area surrounded by the line of 0.75 (on the right side). The reason why these small regions exist is that the pores, from which cooling air blows up, are densely distributed on or in the proximity of the border lines that define their associated small regions.

In terms of the cooling efficiency obtained at the downstream side where the satisfactory cooling effect of the cooling air which blows up from the pores located in the upstream side can be expected, the value of the cooling efficiency of the test piece shown in Fig. 7(b) is about 0.1 higher than the test piece shown in Fig. 7(a).

### [Summary of Test Result]

As understood from the result as described above, variations in cooling efficiency can be reduced and improved cooling efficiency can be achieved by applying the atmospheric plasma spraying to a part of the surface of a structural member to control the porosity thereof according to the porosity control method of the present invention under the condition that the amount of cooling air does not vary. Therefore, if the requested cooling efficiency does not vary, the consumption of cooling air can be lessened by further reducing the porosity according to the method of the present invention. It is apparent that, if the atmospheric plasma spraying is applied to a part of the surface of a structural member according to the method of the present invention to control the porosity, pores can be formed in any desired positions. Although pores are arranged in a direction perpendicular to the direction of the main stream of combustion air in Fig. 5(b), plasma spraying can be performed so as to properly alter pore size, porosity, and pore distribution etc. in accordance with the structural features of actual combustors, whereby heat shield panels having high average cooling efficiency with less variations can be realized.

### Industrial Applicability

Porous metals obtained by the method of the present invention are applicable not only to the combustor liner and the turbine shroud of aircraft gas turbines and industrial gas turbines but also to shock absorbing material for use in structural members or transport machinery (e.g., automobiles, railway vehicles, vessels), acoustic absorbents, heat insulating material and lighter weight material.

## Claims

1. A method of controlling porosity of a heat shield panel comprising a porous metal, **characterized in that** the porosity of the porous metal of the heat shield panel is controlled by applying a plasma spraying to part of the surface of the porous metal.

2. A method as claimed in Claim 1, wherein the porous metal is a lotus type porous metal.

## Patentansprüche

1. Verfahren zum Steuern der Porosität einer Wärmeabschirmungstafel, die ein poröses Metall enthält,
**dadurch gekennzeichnet, dass** die Porosität des porösen Metalls der Wärmeabschirmungstafel durch Anwenden eines Plasmasprühvorgangs auf einen Teil der Oberfläche des porösen Metalls gesteuert wird.

2. Verfahren nach Anspruch 1, wobei das poröse Metall ein poröses Metall des Lotustyps ist.

## Revendications

1. Procédé permettant de maîtriser la porosité d'un panneau de bouclier thermique comprenant un métal poreux, **caractérisé en ce que** la porosité du métal poreux du panneau de bouclier thermique est maîtrisée par l'application d'une pulvérisation par plasma sur une partie de la surface du métal poreux.

2. Procédé selon la revendication 1, dans lequel le métal poreux est un métal poreux de type lotus.
